# FASCICULE DE BREVET EUROPEEN

(11) **EP 4 308 372 B1**
(45) Date de publication et mention de la délivrance du brevet: **26.08.2026**
(21) Numéro de dépôt: 22710621.8
(22) Date de dépôt: 09.03.2022
(51) Int. Cl.: B29C 65/10, B29C 65/36, B29C 65/72, B29C 65/78, B29L 31/30

(54) **INSTALLATION DE SOUDAGE DE PIÈCES EN MATÉRIAUX COMPOSITES THERMOPLASTIQUES ET PROCÉDÉ DE FONCTIONNEMENT**
ANLAGE ZUM VERSCHWEISSEN VON TEILEN AUS THERMOPLASTISCHEN VERBUNDWERKSTOFFEN UND VERFAHREN ZUM BETRIEB EINER SOLCHEN
DEVICE FOR WELDING PARTS MADE OF THERMOPLASTIC COMPOSITE MATERIALS, AND METHOD FOR OPERATING SAME

(30) Priorité: 15.03.2021 FR 2102568
(43) Date de publication de la demande: 24.01.2024
(73) Titulaire: Latecoere, 31500 Toulouse (FR)
(72) Inventeur: BORLOT, Jean,Michel, 81500 TEULAT (FR)
(74) Mandataire: Junca, Eric
(86) Numéro de dépôt international: PCT/EP2022/055990
(87) Numéro de publication internationale: WO 2022/194630

(56) Documents cités:
- EP-A1- 3 785 885
- DE-A1- 10 000 347
- DE-A1- 102012 100 620
- US-A1- 2003 062 118

## Description

### Domaine technique

La présente invention concerne une installation de soudage de pièces en matériaux composites thermoplastiques, ainsi qu'un procédé de fonctionnement d'une telle installation.

Certaines pièces en matériau composite contenant un même ou plusieurs matériaux thermoplastiques ainsi que des éléments conducteurs de courant, comme des fibres de renforcement en carbone, peuvent être soudées entre elles par application d'un champ magnétique localisé qui crée des boucles de courant dans les matériaux conducteurs générant un échauffement permettant d'atteindre la température de fusion des matériaux thermoplastiques.

Pour mettre en œuvre ce procédé on superpose deux pièces comportant des matériaux thermoplastiques compatibles entre eux, puis on déplace une tête d'induction électromagnétique au-dessus de la zone de soudure afin d'obtenir en activant cette tête la température de fusion, un pressage de ces deux pièces entre elles suivant immédiatement la fusion permettant d'atteindre la cohésion entre les parties soudées.

Ce type de procédé permet de réaliser des pièces de grande dimension, pouvant comporter les courbures, présentant à la fois une bonne rigidité et une légèreté importante, en particulier des éléments d'aéronef, comme des portes pour les cabines passagers ou les soutes, ou des éléments du fuselage comme des panneaux de carénage.

### ÉTAT DE LA TECHNIQUE

Une installation de soudage de pièces en matériaux composites thermoplastiques connue, présentée notamment par le document de brevet FR-A1-3018725, comporte un bâti rigide recevant un socle isolant perméable aux ondes électromagnétiques, comprenant un matériau amagnétique, et équipé d'outils de positionnement et de maintien des pièces à souder. On installe les deux pièces à souder avec l'interposition d'un insert métallique réceptif au champ magnétique, le tout étant couvert par une vessie de mise sous vide.

Une tête magnétique d'induction se déplace ensuite automatiquement sur le dessus de la vessie afin de générer sur son parcours une montée en température permettant la fusion des matériaux thermoplastiques, un pressage des pièces par le vide assurant la cohésion de ces parties.

Toutefois ce type de procédé nécessite la mise en place, sous les pièces à souder, d'un isolant amagnétique supporté par le châssis, ce qui empêche d'accéder en dessous de ces pièces à l'endroit de la soudure. Or un tel accès est très utile, notamment pour effectuer des mesures permettant de suivre le soudage avec précision et donc de l'optimiser.

De plus le matériau amagnétique subissant des contraintes thermiques élevées est difficile à réaliser, en particulier pour des grandes dimensions nécessaires pour recevoir des pièces présentant des soudures sur des longueurs importantes. Ce matériau au contact des pièces à souder entraîne aussi des flux thermiques qui rendent difficiles le contrôle précis et homogène de la température de fusion des pièces lors de la soudure, ce qui peut dégrader la qualité de la soudure. On peut prévoir un circuit interne de circulation d'un fluide de refroidissement pour améliorer le contrôle des flux thermiques, mais ce circuit est complexe à réaliser.

De plus, le déplacement de la tête d'induction dans l'espace nécessite un système robotisé, en particulier un bras robotisé comportant six axes de déplacement. Un tel bras est complexe à réaliser et à piloter, et entraîne des coûts de production élevés.

Une autre installation de soudage de pièces en matériaux composites connue, présentée notamment par le document de brevet FR-A1-3083732, comporte une tête d'induction mobile se déplaçant au-dessus des deux pièces à souder, avec une lame magnétique formant un insert disposé entre ces pièces, qui suit le déplacement de la tête afin de disposer en permanence sous cette tête d'un élément récepteur du champ magnétique entraînant la chauffe entre les deux pièces.

La lame métallique communique ainsi sa chaleur aux pièces pour réaliser la fusion des surfaces en contact, des rouleaux presseurs appuyant sur la pièce du dessus, suivant le déplacement pour réaliser la cohésion de la soudure. Ce procédé nécessite une surface de réaction inférieure rigide sous les rouleaux presseurs, posant aussi des problèmes de contrôle thermique. Une variante comporte deux rouleaux presseurs disposés en face l'un de l'autre de part et d'autre des deux pièces à souder, en aval de la soudure.

Cette installation assure difficilement le positionnement précis de la zone de soudage par rapport à la tête d'induction, en particulier pour des empilages de pièces présentant des formes courbes suivant la direction verticale. Il faut dans ce cas disposer de moyens de mesure des pièces complémentaires, ou effectuer des calculs complexes.

D'autres installations de soudage qui sont décrites, notamment, dans le US 2003/062118A1 et le DE 100 00 347A1, comprennent une tête d'induction électromagnétique et, de chaque côté de cette tête, des organes, superposés respectivement, supérieur et inférieur, de guidage d'un empilage de pièces dans la direction perpendiculaire au plan local de soudage.

Cependant, dans ces installations, la tête d'induction est fixe et sa hauteur relativement à l'empilage est maintenue constante par les organes de guidage. Par conséquent, la tête ne peut pas s'adapter à la courbure de l'empilage.

### EXPOSE DE L'INVENTION

La présente invention a notamment pour but d'éviter ces problèmes de l'art antérieur, par une mise en œuvre simple assurant notamment un positionnement précis de la zone de soudage par rapport à la tête d'induction. Elle propose à cet effet de disposer d'une installation de soudage à guidage de l'empilage des pièces à souder, et non nécessairement de la tête d'induction. Une telle installation peut recevoir des pièces présentant des courbures variées, et comporte une facilité de contrôle de la qualité des soudures par l'absence de socle de positionnement des pièces à souder.

Plus précisément, la présente invention a pour objet une installation de soudage d'un empilage de pièces en matériaux composites thermoplastiques dans un plan local de soudage, cette installation comportant une tête d'induction électromagnétique et des guidages de l'empilage des pièces dans ce plan de soudage, avec de chaque côté de la tête d'induction au moins un couple de guidage, chaque couple de guidage comprenant un guidage inférieur et un guidage supérieur superposés aptes à recevoir entre eux l'empilage de pièces en le guidant dans la direction perpendiculaire au plan local de soudage.

Un avantage de cette installation de soudage est qu'en disposant, de part et d'autre de la tête d'induction, des guidages recevant entre eux les pièces, on réalise facilement, en laissant la tête d'induction à une hauteur fixe, à la fois un guidage en hauteur de la zone de soudage par rapport à cette tête, et un pressage des pièces au moins en aval de la soudure.

De plus en adaptant la hauteur de chaque couple de guidage on a la possibilité de passer des pièces présentant des courbures, avec un ajustement direct du plan local de soudage par rapport à la tête d'induction. On obtient une installation économique et facile à contrôler, comportant une tête d'induction qui peut rester fixe sur un axe perpendiculaire au plan local de soudage.

L'installation de soudage selon l'invention peut avantageusement comporter de plus une ou plusieurs des caractéristiques préférées suivantes, qui peuvent être combinées entre elles.

Avantageusement, chaque guidage inférieur et guidage supérieur des couples de guidage sont mobiles suivant la direction perpendiculaire au plan local de soudage.

Dans ce cas, avantageusement, chaque couple de guidage comporte au moins un guidage inférieur ou un guidage supérieur équipé d'un système de régulation en déplacement de son mouvement suivant la direction perpendiculaire au plan local de soudage.

Avantageusement, au moins un couple de guidage comporte un système de régulation de la pression apte à être exercée sur l'empilage entre le guidage inférieur et le guidage supérieur.

Avantageusement, chaque guidage inférieur et supérieur comporte un dispositif de roulement contre l'empilage présentant des axes parallèles au plan local de soudage.

Dans ce cas, avantageusement les guidages inférieur et supérieur comportent des rouleaux presseurs comprenant un revêtement en silicone chargé.

Avantageusement, au moins un couple de guidage comporte un dispositif de déplacement d'un guidage inférieur ou supérieur par rapport à l'autre dans la direction du plan local de soudage.

Dans ce cas, avantageusement l'installation de soudage comporte un système de régulation du dispositif de déplacement dans la direction du plan local de soudage fonction de la courbure de l'empilage, en assurant une perpendicularité de la pression par rapport aux surfaces.

Avantageusement, la tête d'induction comporte un dispositif de positionnement vertical de cette tête.

En particulier, l'installation de soudage peut comporter un support relié à un bâti fixe par le dispositif de positionnement vertical de tête, qui supporte aussi les guidages supérieurs des couples de guidage.

Avantageusement, l'installation de soudage comporte un cadre mobile de maintien et de positionnement destiné à l'empilage de pièces, réalisant un déplacement de la zone à souder de cet empilage sous la tête d'induction.

Avantageusement, l'installation de soudage comporte des jets d'air de chauffage ou de refroidissement disposés entre les guidages inférieurs.

Avantageusement, l'installation de soudage comporte des moyens de mesure de la zone de soudage disposés entre les guidages inférieurs.

En particulier, les moyens de mesure peuvent être choisis parmi une caméra visuelle ou thermique, des fibres optiques couplées à un télémètre à impulsions, et/ou des capteurs de position ou de distance.

De plus, avantageusement l'installation de soudage comporte un système de régulation en continu de paramètres de réglage de son fonctionnement suivant des données délivrées par les moyens de mesure.

L'invention a aussi pour objet un procédé de fonctionnement d'une installation de soudage telle que définie ci-dessus, ce procédé ajustant en temps réel la hauteur de chaque couple de guidage suivant le défilement de l'empilage de pièces pendant la soudure.

Dans le présent texte, le qualificatif « vertical », respectivement « horizontal », se rapporte à un objet en mode utilisation ayant une orientation, un déplacement ou un positionnement d'axe perpendiculaire au sol, respectivement selon un axe parallèle au sol. De plus « supérieur », respectivement « inférieur », qualifie en mode utilisation un rouleau agencé au-dessus du plan de soudage, respectivement en-dessous de ce plan. « En-dessous », respectivement « au-dessus », se rapporte à un positionnement relatif plus près du sol, respectivement plus éloigné du sol, en mode utilisation.

### PRESENTATION DES FIGURES

L'invention sera mieux comprise et d'autres caractéristiques et avantages apparaîtront de manière détaillée à la lecture de la description ci-après donnée à titre d'exemple non limitatif, en référence aux dessins annexés qui représentent respectivement :
[Fig. 1] une vue schématique de face d'une installation de soudage selon l'invention ;
[Fig. 2] cette installation réalisant une soudure sur des pièces plates ;
[Fig. 3] cette installation équipée d'instrumentations d'action ou de mesure disposées en dessous des pièces ; et
[Fig. 4] cette installation réalisant une soudure sur des pièces courbes.

### DESCRIPTION DETAILLEE

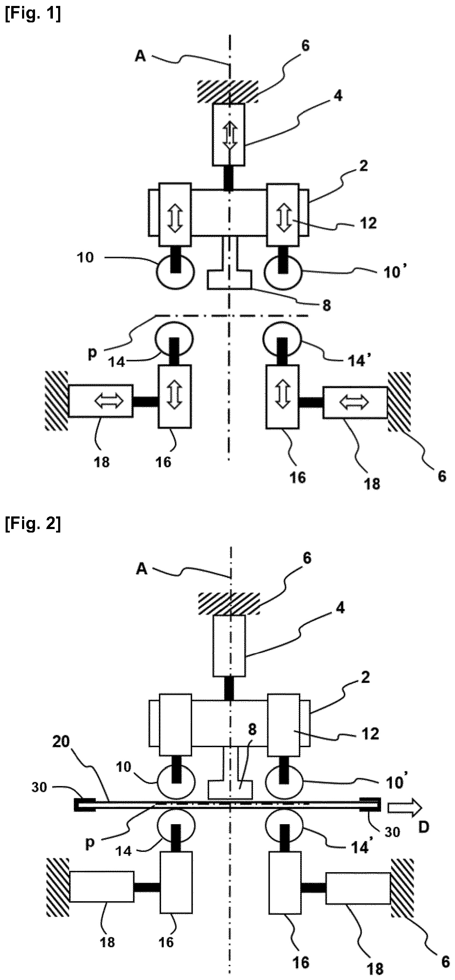

La figure 1 présente un support 2 relié par un dispositif de déplacement vertical de tête 4 fixé à un bâti 6, permettant un déplacement de ce support suivant un axe vertical A. Le support 2 reçoit en dessous une tête d'induction 8 disposée suivant l'axe vertical A, qui permet de chauffer et de réaliser une soudure dans un plan local de soudage horizontal P formé juste en dessous de cette tête 8.

Le support 2 reçoit de manière symétrique de chaque côté de la tête d'induction 8, un rouleau presseur supérieur 10, 10' fixé sous un dispositif de positionnement vertical de rouleau supérieur 12 lié au support 2. Les deux rouleaux presseurs supérieurs 10, 10' présentent des axes parallèles, qui sont disposés parallèlement au plan local de soudage P.

Chaque rouleau supérieur 10, 10' comporte en dessous un rouleau inférieur 14, 14' relié au bâti 6 successivement par un dispositif de positionnement vertical de rouleau inférieur 16, puis par un dispositif de positionnement horizontal de rouleau inférieur 18.

Chaque rouleau supérieur 10, 10' forme un couple de guidage avec son rouleau inférieur 14, 14' positionné en regard. Dans l'exemple illustré, le couple de rouleaux presseurs 10', 14' forme le couple de guidage amont et le couple de rouleaux presseurs 10, 14 forme le couple de guidage aval. Plus généralement, en amont et en aval de la tête d'induction 8 par rapport au sens de défilement D (cf. figure 2) des pièces à souder, un ou plusieurs couples de guidage sont agencés pour former respectivement un couple de guidage amont et un couple de guidage aval.

Les différents dispositifs de déplacement et de positionnement 4, 12, 16, 18 peuvent comporter tous types d'actionneurs permettant une translation, comme un vérin électrique ou un vérin à fluide pneumatique ou hydraulique, comprenant en particulier une commande numérisée, permettant d'obtenir en temps réel pour ces dispositifs une régulation de déplacement à partir d'une consigne de position, ou une régulation de pression à partir d'une consigne d'effort.

De cette manière on obtient pour chaque couple de guidage comportant un rouleau supérieur 10, 10' et un rouleau inférieur 14, 14' disposés en face l'un de l'autre, entre ces rouleaux à la fois un serrage défini des pièces superposées et un positionnement vertical précis à ce point de serrage.

La figure 2 présente un empilage de pièces plates superposées 20, avantageusement maintenu à l'intérieur d'un cadre rigide 30. Le cadre 30 se déplace dans l'espace avec une motorisation numérisée, non représentée, afin de faire défiler la zone à souder sous la tête d'induction 8 selon le défilement linéaire D pour obtenir un cordon continu de soudure.

La zone à souder de l'empilage 20 est serré des deux côtés de la tête d'induction 8 par les rouleaux supérieurs 10, 10' et inférieurs 14, 14' de chaque couple de guidage, situés en amont et en aval selon le sens de défilement D, avec une hauteur pour chaque couple réglée afin d'ajuster la hauteur de cette zone par rapport au plan local de soudage P. On obtient de cette manière avec le cadre 30 un positionnement global de l'empilage 20, comprenant le déplacement de la zone à souder dans le plan local de soudage P, et un positionnement précis en hauteur de cette zone avec les deux systèmes de soudage assurant la distance nécessaire sous la tête d'induction électromagnétique 8.

On réalise avantageusement pour chaque couple de guidage une régulation de déplacement vertical sur l'un des rouleaux assurant le positionnement de l'empilage 20, et une régulation de pression sur l'autre rouleau pour assurer le serrage nécessaire de cet empilage.

Le dispositif de déplacement vertical de tête 4 permet en particulier de lever suivant une course conséquente le support 2 avec la tête d'induction 8 et les deux rouleaux supérieurs 10, 10' pour introduire l'empilage de pièces 20 en dessous sans être gêné. Il permet ensuite d'approcher de manière précise la base de la tête d'induction 8 à la distance souhaitée du plan local de soudage P, qui peut varier suivant les pièces à souder, ou pendant la soudure d'un même empilage 20 avec son défilement D, comprenant des caractéristiques techniques des zones à souder qui varient pendant le défilement de la soudure.

On peut en particulier prévoir deux type d'entraînement du dispositif de déplacement de tête 4, comprenant un entraînement rapide sur une grande course pour dégager l'espace sous la tête d'induction 8, puis un entraînement plus lent et plus précis sur une petite course pour effectuer le réglage de la distance optimale d'induction, qui peut s'ajouter à un réglage en hauteur donné par les couples de guidage à rouleaux 10, 14 et 10', 14'.

Avantageusement les rouleaux presseurs 10, 10', 14, 14' comportent un revêtement légèrement souple permettant de s'adapter à des grands rayons de l'empilage des pièces 20, et assurant une adhérence ainsi qu'une répartition de la pression évitant de marquer ces pièces. En particulier on utilise un polymère résistant aux températures élevées, supérieures à 300°, et ne causant pas de perturbation magnétique du champ émis par la tête d'induction 8, comme un silicone chargé.

Les couples de rouleaux 10, 14 et 10', 14' permettent aussi d'effectuer une rotation de l'empilage de pièces 20 dans le plan local de soudage P suivant un grand rayon, donnée par un mouvement du cadre 30 pendant le défilement D, pour réaliser une ligne de soudure courbe dans ce plan.

Le couple de rouleaux aval 10, 14 réalise de plus un pressage calibré de l'empilage 20 qui vient d'être chauffé afin d'assurer une cohésion de la soudure par un réglage de la pression dans la zone en fusion pendant son refroidissement. La pression de serrage peut varier en continu en fonction des caractéristiques techniques de la zone à souder des pièces, qui peut évoluer dans un même empilage 20.

En variante on peut réaliser des couples de guidage comprenant d'autres moyens de serrage permettant un mouvement latéral de l'empilage de pièces 20, comportant par exemple plusieurs rouleaux disposés les uns à côté des autres, ou un système de chenillette entourant des rouleaux afin de répartir la pression de serrage sur une plus grande surface.

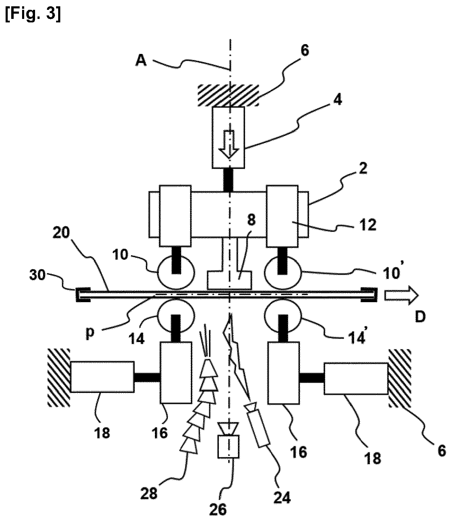

La figure 3 présente des instrumentations disposées directement sous l'empilage 20, en regard de la tête d'induction 8 entre les deux rouleaux inférieurs 14, permettant de disposer au plus près de la zone chauffée des moyens d'action, ou des moyens de mesure afin d'obtenir des informations précises représentatives de l'état physique de cette zone.

On notera que l'écartement relatif des couples de rouleaux 10, 14 et 10', 14' situés de part et d'autre de la tête d'induction 8 libère cet espace inférieur, en éloignant les masses des rouleaux qui pourraient perturber les phénomènes physiques au niveau de la zone de fusion, comme le champ magnétique ou la propagation thermique.

On peut disposer en particulier des jets d'air de chauffage ou de refroidissement 24 de l'empilage 20, une caméra visuelle ou thermique 26, des fibres optiques 28 reliées à un télémètre à impulsions, par exemple un télémètre laser, ou des capteurs de position ou de distance. Les mesures réalisées permettent avantageusement de piloter en continu les différents paramètres de fonctionnement de l'installation de soudage, comprenant en particulier la vitesse de défilement de l'empilage D, l'énergie électromagnétique délivrée par la tête d'induction 8, la distance précise de cette tête et/ou la force de serrage du couple de guidage aval 10, 14. On obtient ainsi un niveau de qualité élevé de la soudure qui est garanti.

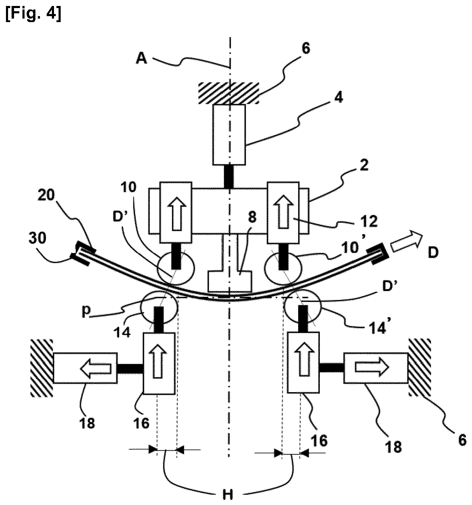

La figure 4 présente un empilage de pièces courbe 20 comportant un grand rayon de courbure dans un plan perpendiculaire au plan local de soudage P, de sorte que le défilement D reste ponctuellement proche d'un défilement linéaire. Dans ce cas on ajuste les dispositifs de positionnement horizontal 18 des rouleaux inférieurs 14, 14' avec un déplacement H pour obtenir en chaque point de l'empilage 20, pour chaque couple de guidage une droite D' passant par l'axe de son rouleau supérieur 10, 10' et de son rouleau inférieur 14, 14' qui est sensiblement perpendiculaire à la surface de l'empilage à cet endroit. On obtient de cette manière avec un ajustement des dispositifs de positionnement horizontal 18 qui peut évoluer en temps réel suivant les rayons de l'empilage courbe 20, un serrage optimum ne déformant pas les pièces grâce à ce serrage restant toujours perpendiculaire aux surfaces.

On ajuste en même temps la hauteur de chaque couple de guidage pour maintenir la zone à souder dans le plan local de soudage P, en tenant compte du rayon de courbure de l'empilage courbe 20 ce qui permet de maintenir la qualité optimum de la soudure.

En variante on peut utiliser un dispositif de positionnement horizontal sur les rouleaux supérieurs 10 qui, de la même manière, permettrait de modifier l'angle de la droite passant par l'axe des rouleaux de chaque couple de guidage.

D'une manière générale on obtient avec les deux couples de guidage disposés de part et d'autre de la tête d'induction, au plus près de cette tête, un moyen robuste, précis et réactif de réglage de la hauteur de la zone à souder en chaque endroit indépendant des dispersions ou des flexibilités de l'empilage 20 qui peuvent être importantes sur des grandes pièces réalisées en matériaux thermoplastiques. Un contrôle numérique continu de l'ensemble des mouvements de l'installation de soudage, et des paramètres de la soudure comme la fréquence et l'intensité du champ électromagnétique, défini au préalable dans un scénario de soudure, avec des modulations données par un contrôle en continu, permet d'optimiser à la fois le temps et la qualité de la soudure.

L'invention n'est pas limitée aux exemples décrits et illustrés. En particulier, les moyens de contrôle thermique ou de contrôle visuel de soudage peuvent venir en combinaison avec des installations de contrôle classiquement situées en position supérieure - avant le rouleau amont, entre les rouleaux, ou après le rouleau aval. En particulier, les jets d'air de contrôle thermique peuvent être placés en tout emplacement adéquat (avant, entre ou après les rouleaux supérieurs ou inférieurs, et/ou encore latéralement).

Il est également possible de remplacer les rouleaux aval par des patins régulés thermiquement, conjointement (deux patins aval) ou séparément en combinant un patin à un rouleau en vis-à-vis. Il peut également être approprié d'adjoindre une ou des « enceintes » chauffées autour du ou des rouleaux ou des patins, afin d'assurer le contrôle thermique de la zone soudée en aval de la tête d'induction. Ces enceintes seront liées aux rouleaux ou patins et assureront un contact suffisamment hermétique avec les pièces à souder.

## Revendications

1. Installation de soudage d'un empilage de pièces en matériaux composites thermoplastiques (20) dans un plan local de soudage (P), cette installation comportant une tête d'induction électromagnétique (8) et, de chaque côté de ladite tête d'induction, au moins un couple de guidages (10, 14 ; 10', 14'), chaque couple comprenant, respectivement, un guidage inférieur (14, 14') et un guidage supérieur (10, 10') superposés aptes à recevoir entre eux l'empilage de pièces (20) en le guidant dans la direction perpendiculaire au plan local de soudage (P), **caractérisée en ce qu'**au moins un couple de guidage comporte un dispositif de déplacement du guidage inférieur (14, 14') ou supérieur (10, 10') par rapport à l'autre dans la direction du plan local de soudage (P) et un système de régulation dudit dispositif de déplacement en fonction de la courbure de l'empilage (20) de façon à assurer une perpendicularité de la pression par rapport aux surfaces.

2. Installation de soudage selon la revendication 1, dans laquelle chaque guidage inférieur (14, 14') et guidage supérieur (10, 10') des couples de guidage sont mobiles suivant la direction perpendiculaire au plan local de soudage (P).

3. Installation de soudage selon la revendication 2, dans laquelle chaque couple de guidage comporte au moins un guidage inférieur (14, 14') et/ou un guidage supérieur (10, 10') équipé d'un système de régulation en déplacement de son mouvement suivant la direction perpendiculaire au plan local de soudage (P).

4. Installation de soudage selon l'une quelconque des revendications 1 à 3, **caractérisée en ce qu'**au moins un couple de guidage comporte un système de régulation de la pression apte à être exercée sur l'empilage (20) entre le guidage inférieur (14, 14') et le guidage supérieur (10, 10').

5. Installation de soudage selon l'une quelconque des revendications 1 à 4, **caractérisée en ce que** chaque guidage inférieur (14, 14') et supérieur (10, 10') comporte un dispositif de roulement contre l'empilage (20) présentant des axes parallèles au plan local de soudage (P).

6. Installation de soudage selon la revendication 5, dans laquelle les guidages inférieur (14, 14') et supérieur (10, 10') comportent des rouleaux presseurs comprenant un revêtement en silicone chargé.

7. Installation de soudage selon l'une quelconque des revendications précédentes, **caractérisée en ce que** la tête d'induction (8) comporte un dispositif de positionnement vertical de cette tête (4).

8. Installation de soudage selon la revendication 7, dans laquelle un support (2) relié à un bâti fixe (6) par le dispositif de positionnement vertical de tête (4), qui supporte aussi les guidages supérieurs (10, 10') des couples de guidage.

9. Installation de soudage selon l'une quelconque des revendications précédentes, **caractérisée en ce qu'**elle comporte un cadre mobile (30) de maintien et de positionnement destiné à l'empilage de pièces (20), réalisant un déplacement de la zone à souder de cet empilage (20) sous la tête d'induction (8).

10. Installation de soudage selon l'une quelconque des revendications précédentes, **caractérisée en ce qu'**elle comporte des jets d'air de chauffage ou de refroidissement (24) disposés entre les guidages inférieurs (14, 14').

11. Installation de soudage selon l'une quelconque des revendications précédentes, **caractérisée en ce qu'**elle comporte des moyens de mesure de la zone de soudage disposés entre les guidages inférieurs (14, 14').

12. Installation de soudage selon la revendication 11, dans laquelle les moyens de mesure sont choisis parmi une caméra visuelle ou thermique (26), des fibres optiques (28) reliées à un télémètre à impulsions, et/ou des capteurs de position ou de distance.

13. Installation de soudage selon l'une quelconque des revendications 11 ou 12, dans laquelle un système de régulation en continu de paramètres de réglage de son fonctionnement suivant des données délivrées par les moyens de mesure.

14. Procédé de fonctionnement d'une installation de soudage selon l'une quelconque des revendications 1 à 13, dans lequel la hauteur de chaque couple de guidage (10,14; 10', 14') est ajustée en temps réel suivant le défilement (D) de l'empilage de pièces (20) pendant la soudure.

## Patentansprüche

1. Anlage zum Schweißen eines Stapels (20) von Teilen aus thermoplastischen Verbundwerkstoffen in einer lokalen Schweißebene (P), wobei diese Anlage einen elektromagnetischen Induktionskopf (8) und, auf jeder Seite des Induktionskopfes, mindestens ein Paar Führungen (10, 14; 10', 14') umfasst, wobei jedes Paar jeweils eine untere Führung (14, 14') und eine obere Führung (10, 10') beinhaltet, die übereinander liegen und geeignet sind, zwischen sich den Stapel (20) von Teilen aufzunehmen, indem sie ihn in der senkrecht zu der lokalen Schweißebene (P) verlaufenden Richtung führen, **dadurch gekennzeichnet, dass** mindestens ein Führungspaar eine Vorrichtung zur Verlagerung der unteren Führung (14, 14') oder oberen Führung (10, 10') in Bezug auf die andere in Richtung der lokalen Schweißebene (P) und ein System zur Regulierung der Vorrichtung zur Verlagerung in Abhängigkeit von der Krümmung des Stapels (20) umfasst, so dass die Rechtwinkligkeit des Drucks in Bezug auf die Oberflächen gewährleistet wird.

2. Anlage zum Schweißen nach Anspruch 1, wobei jede untere Führung (14, 14') und obere Führung (10, 10') der Führungspaare entlang der senkrecht zu der lokalen Schweißebene (P) verlaufenden Richtung beweglich ist.

3. Anlage zum Schweißen nach Anspruch 2, wobei jedes Führungspaar mindestens eine untere Führung (14, 14') und/oder eine obere Führung (10, 10') umfasst, die mit einem System zur Regulierung der Verlagerung ihrer Bewegung entlang der senkrecht zu der lokalen Schweißebene (P) verlaufenden Richtung ausgestattet ist.

4. Anlage zum Schweißen nach einem der Ansprüche 1 bis 3, **dadurch gekennzeichnet, dass** mindestens ein Führungspaar ein System zur Regulierung des Drucks umfasst, der auf den Stapel (20) zwischen der unteren Führung (14, 14') und der oberen Führung (10, 10') ausgeübt werden kann.

5. Anlage zum Schweißen nach einem der Ansprüche 1 bis 4, **dadurch gekennzeichnet, dass** jede untere Führung (14, 14') und obere Führung (10, 10') eine Vorrichtung zum Abrollen gegen den Stapel (20) umfasst, die parallel zu der lokalen Schweißebene (P) verlaufende Achsen aufweist.

6. Anlage zum Schweißen nach Anspruch 5, wobei die unteren Führungen (14, 14') und oberen Führungen (10, 10') Andrückrollen mit einer verstärkten Silikonbeschichtung umfassen.

7. Anlage zum Schweißen nach einem der vorhergehenden Ansprüche, **dadurch gekennzeichnet, dass** der Induktionskopf (8) eine Vorrichtung (4) zur vertikalen Positionierung dieses Kopfes umfasst.

8. Anlage zum Schweißen nach Anspruch 7, wobei eine Halterung (2), die mit einem feststehenden Gestell (6) durch die Vorrichtung (4) zur vertikalen Positionierung des Kopfes verbunden ist, die auch die oberen Führungen (10, 10') der Führungspaare trägt.

9. Anlage zum Schweißen nach einem der vorhergehenden Ansprüche, **dadurch gekennzeichnet, dass** sie einen beweglichen Rahmen (30) zum Halten und Positionieren umfasst, der für den Stapel (20) von Teilen bestimmt ist und eine Verlagerung der zu schweißenden Zone dieses Stapels (20) unter dem Induktionskopf (8) ausführt.

10. Anlage zum Schweißen nach einem der vorhergehenden Ansprüche, **dadurch gekennzeichnet, dass** sie Luftstrahlen (24) zum Erwärmen und Kühlen umfasst, die zwischen den unteren Führungen (14, 14') angeordnet sind.

11. Anlage zum Schweißen nach einem der vorhergehenden Ansprüche, **dadurch gekennzeichnet, dass** sie Mittel zum Messen der Schweißzone umfasst, die zwischen den unteren Führungen (14, 14') angeordnet sind.

12. Anlage zum Schweißen nach Anspruch 11, wobei die Messmittel aus einer Visuell- oder Wärmebildkamera (26), optischen Fasern (28), die mit einem Impuls-Entfernungsmesser verbunden sind, und/oder Positions- oder Abstandssensoren ausgewählt sind.

13. Anlage zum Schweißen nach einem der Ansprüche 11 oder 12, wobei ein System zur kontinuierlichen Regulierung von Parametern zur Regelung ihres Betriebs gemäß von den Messmitteln ausgegebenen Daten.

14. Verfahren zum Betreiben einer Anlage zum Schweißen nach einem der Ansprüche 1 bis 13, wobei die Höhe jedes Führungspaares (10, 14; 10', 14') in Echtzeit entsprechend dem Durchlaufen (D) des Stapels (20) von Teilen während des Schweißens angepasst wird.

## Claims

1. A welding installation for welding a stack of thermoplastic composite workpieces (20) within a local welding plane (P), the installation comprising an electromagnetic induction head (8) and, on either side of the said induction head, at least one pair of guides (10, 14; 10', 14'), each pair comprising, respectively, a lower guide (14, 14') and an upper guide (10, 10') arranged one above the other, capable of receiving the stack of workpieces (20) between them whilst guiding it in the direction perpendicular to the local welding plane (P), **characterised in that** at least one pair of guides comprises a device for moving the lower guide (14, 14') or upper guide (10, 10') relative to the other in the direction of the local welding plane (P), and a control system for said displacement device based on the curvature of the stack (20) so as to ensure that the pressure is perpendicular to the surfaces.

2. A welding installation according to claim 1, in which each lower guide (14, 14') and upper guide (10, 10') of the guide pairs is movable in the direction perpendicular to the local welding plane (P).

3. A welding installation according to claim 2, in which each guide pair comprises at least one lower guide (14, 14') and/or one upper guide (10, 10') equipped with a system for regulating the displacement of its movement in the direction perpendicular to the local welding plane (P).

4. A welding installation according to any one of claims 1 to 3, **characterised in that** at least one guide pair comprises a system for regulating the pressure capable of being exerted on the stack (20) between the lower guide (14, 14') and the upper guide (10, 10').

5. A welding installation according to any one of claims 1 to 4, **characterised in that** each lower guide (14, 14') and upper guide (10, 10') comprises a rolling device against the stack (20) having axes parallel to the local welding plane (P).

6. A welding installation according to claim 5, in which the lower (14, 14') and upper (10, 10') guides comprise pressure rollers having a filled silicone coating.

7. A welding installation according to any one of the preceding claims, **characterised in that** the induction head (8) comprises a vertical positioning device (4) for said head.

8. A welding installation according to claim 7, in which a support (2) connected to a fixed frame (6) by the vertical head positioning device (4) also supports the upper guides (10, 10') of the guide pairs.

9. A welding installation according to any one of the preceding claims, **characterised in that** it comprises a movable holding and positioning frame (30) for stacking workpieces (20), which moves the area to be welded of said stack (20) beneath the induction head (8).

10. A welding installation according to any one of the preceding claims, **characterised in that** it comprises heating or cooling air jets (24) arranged between the lower guides (14, 14').

11. A welding installation according to any one of the preceding claims, **characterised in that** it comprises means for measuring the welding zone arranged between the lower guides (14, 14').

12. A welding installation according to claim 11, in which the measuring means are selected from a visual or thermal camera (26), optical fibres (28) connected to a pulse rangefinder, and/or position or distance sensors.

13. A welding installation according to any one of claims 11 or 12, in which a system for continuously regulating operating parameters based on data supplied by the measuring means.

14. A method of operating a welding installation according to any one of claims 1 to 13, in which the height of each guide pair (10, 14; 10', 14') is adjusted in real time in accordance with the movement (D) of the stack of workpieces (20) during welding.
